(19) Europäisches Patentamt / European Patent Office / Office européen des brevets

(11) **EP 4 361 885 A1**

(12) **EUROPEAN PATENT APPLICATION**
published in accordance with Art. 153(4) EPC

(43) Date of publication:
**01.05.2024  Bulletin 2024/18**

(21) Application number: **22862845.9**

(22) Date of filing: **28.06.2022**

(51) International Patent Classification (IPC):
**G06N 3/04** (2023.01)

(52) Cooperative Patent Classification (CPC):
**G06N 3/04; G06N 3/0464; G06N 3/084; G06V 10/774; G06V 10/82**

(86) International application number:
**PCT/CN2022/101941**

(87) International publication number:
**WO 2023/029704 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021  CN 202111015826**

(71) Applicant: **Huawei Technologies Co., Ltd.**
**Shenzhen, Guangdong 518129 (CN)**

(72) Inventors:
• **FU, Rongrong**
  **Shenzhen, Guangdong 518129 (CN)**
• **XU, Xiaoxin**
  **Shenzhen, Guangdong 518129 (CN)**
• **HUANG, Quanchong**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **DATA PROCESSING METHOD, APPARATUS AND SYSTEM**

(57)    A data processing method is provided, and the method includes: When performing iterative training on a first neural network deployed on a first edge device, a cloud-side device obtains a first training set based on an application scenario feature of data collected by the first edge device, obtains a trained first neural network based on the first training set and the first neural network deployed on the first edge device, and deploys the trained first neural network on the first edge device. The first training set obtained by the cloud-side device includes the data of the first edge device and sample data associated with the application scenario feature. In comparison with a limitation of sample data included in an incremental training set, the sample data for iterative training is added, and in comparison with broadness of sample data included in a full training set, data irrelevant to the application scenario feature is reduced. Therefore, data processing precision of an iteratively trained neural network is effectively improved.

FIG. 5

## Description

This application claims priority to Chinese Patent Application No. 202111015826.1, filed with the China National Intellectual Property Administration on August 31, 2021 and entitled "DATA PROCESSING METHOD, APPARATUS, AND SYSTEM", which is incorporated herein by reference in its entirety.

## TECHNICAL FIELD

This application relates to the field of artificial intelligence, and in particular, to a data processing method, apparatus, and system.

## BACKGROUND

Artificial intelligence (Artificial Intelligence, AI) is a theory, method, technology, and application system that simulates, extends, and expands human intelligence by using a digital computer or a digital computer-controlled machine, to perceive an environment, obtain knowledge, and use the knowledge to obtain an optimal result. Researches in the field of the artificial intelligence include machine learning (Machine Learning, ML), natural language processing, computer vision, decision-making and inference, human-computer interaction, recommendation and search, basic theories of AI, and the like.

Generally, a cloud-side device may train a neural network by using a training set, so that the neural network has an application function such as identification, and may deploy the neural network on at least one edge device (such as a smartphone, a camera, or an autonomous vehicle). The edge device uses the neural network to process collected application data (such as images and voices) to implement the application function such as the identification. To improve data processing precision of the neural network, the edge device may perform iterative training on the neural network by using an incremental training set. However, application data included in the incremental training set is collected by the edge device. Due to factors such as a type, an installation angle, and a natural environment of the edge device, the data included in the incremental training set is limited, and lacks a similar feature related to an application scenario. Therefore, the data processing precision of an iteratively trained neural network is still low. The edge device may further feed back the application data to the cloud-side device, and the cloud-side device uses a full training set to perform iterative training on the neural network. Because application data in different scenarios has different features, a feature that is included in the full training set and that is irrelevant to the application scenario affects the data processing precision of the neural network. Therefore, how to provide a data processing method for improving data processing precision of an iteratively trained neural network becomes an urgent problem to be resolved.

## SUMMARY

This application provides a data processing method, apparatus, and system, to ensure that a requirement for improving data processing precision of an iteratively trained neural network is met.

According to a first aspect, a data processing method is provided. The method may be performed by a cloud-side device, and specifically includes the following steps: When performing iterative training on a first neural network deployed on a first edge device, the cloud-side device obtains a first training set based on an application scenario feature of data collected by the first edge device, obtains a trained first neural network based on the first training set and the first neural network deployed on the first edge device, and deploys the trained first neural network on the first edge device. In this way, the first training set obtained by the cloud-side device includes the data of the first edge device and sample data associated with the application scenario feature. In comparison with a limitation of sample data included in an incremental training set, the sample data for iterative training is added, and in comparison with broadness of sample data included in a full training set, data irrelevant to the application scenario feature is reduced. Therefore, data processing precision of an iteratively trained neural network is effectively improved.

The data includes data in at least one form of an image, a voice, or a text. An edge device may obtain the data through a sensor. The sensor includes at least one of a camera, an audio sensor, and a laser radar. The edge device may be a terminal, such as a mobile phone terminal, a tablet, a laptop computer, a virtual reality (virtual reality, VR) device, an augmented reality (augmented reality, AR) device, a mixed reality (Mixed Reality, MR) device, an extended reality (Extended Reality, ER) device, a camera, or a vehicle-mounted terminal. The application scenario feature includes at least one of a light feature, a texture feature, a shape feature, and a spatial relationship feature.

In a possible implementation, the obtaining the first training set based on the application scenario feature of the data collected by the first edge device includes: The cloud-side device determines a first class group based on the application scenario feature of the data collected by the first edge device, and obtains the first training set based on data of edge devices in the first class group. Because the data of the edge devices in the first class group is the same as or similar to the data of the application scenario feature, the data of the edge devices in the first class group to which the first edge device belongs is used as the first training set, and the data that is included in the full training set and that is irrelevant to the application scenario feature is excluded, to avoid that the data irrelevant to the application scenario feature affects the data processing precision of the iteratively trained neural network. In addition, the data that is associated with the application scenario feature and that is lacking in the incremental training set is added. Therefore, the data processing precision of the iteratively trained neural network is effectively improved.

For example, the determining the first class group based on the application scenario feature of the data provided by the first edge device includes: The cloud-side device determines the first class group based on a class group identifier related to the application scenario feature of the data provided by the first edge device. The obtaining the first training set based on the data of edge devices in the first class group includes: The cloud-side device determines K edge devices based on device similarity between the edge devices in the first class group, and obtains the first training set based on the data of the first edge device and data of the K edge devices in the first class group. The similarity indicates a degree of similarity between application scenario features of data of two edge devices, K is an integer greater than or equal to 1, and K is less than a quantity of edge devices included in the first class group.

In another possible implementation, before the obtaining the first training set based on the application scenario feature of the data collected by the first edge device, the method further includes: The cloud-side device classifies edge devices in a system into a plurality of class groups based on a classification policy, where the classification policy indicates a classification rule based on device similarity between the edge devices, the plurality of class groups include the first class group, and each class group includes at least two edge devices. Therefore, when the cloud-side device needs to perform the iterative training on a neural network deployed on the edge device, the cloud-side device obtains, based on a class group, data used for training. In this way, the data processing precision of the edge device based on the iteratively trained neural network is improved.

The device similarity between the edge devices is determined based on an application scenario feature of data of the edge devices in the system. For example, the device similarity between the edge devices is determined based on the application scenario feature of the data of the edge devices in the system in a preset time period. The preset time period may be obtained through classification based on a service busy degree. For example, the preset time period includes a traffic peak time period and a traffic off-peak time period. Alternatively, the preset time period is obtained through classification based on light duration. For example, the preset time period includes a daytime period and a night period.

In another possible implementation, the obtaining the trained first neural network based on the first training set and the first neural network deployed on the first edge device includes: The cloud-side device performs supervised training or semi-supervised training on the first neural network based on the first training set, to obtain the trained first neural network. For example, the cloud-side device obtains, by using the first neural network and neural networks deployed on the K edge devices, a label of the data included in the first training set, and trains the first neural network based on the data included in the first training set and the label of the data included in the first training set, to obtain the trained first neural network. The label of the data in the first training set includes at least one of a pseudo label, a predicted label, and a manual label.

The label of the data included in the first training set is jointly predicted by the neural networks of the K adjacent devices in the class group. A result of high-confidence data with high accuracy is used for the pseudo label. Uncertain data with low accuracy is used for manual labeling. In addition, a batch of diversified data whose average prediction probabilities cover each probability interval as evenly as possible is additionally selected for semi-supervised learning. In this way, in this embodiment of this application, data at three layers: high confidence, uncertainty, and diversity, are provided for the iteratively trained neural network, and then the training is performed in a semi-supervised manner. The high-confidence data and the diversified data obtained through data collaboration do not need to be manually labeled. This greatly reduces labeling costs. In addition, data mining at the plurality of layers and the semi-supervised learning are used for fully mining values of labeled and unlabeled data. This improves decision-making and generalization abilities of the neural network.

According to a second aspect, a data processing apparatus is provided. The apparatus includes modules configured to perform the data processing method according to any one of the first aspect or the possible implementations of the first aspect.

According to a third aspect, a data processing system is provided. The data processing system includes at least one processor and a memory. The memory is configured to store a group of computer instructions. When the processor is used as an execution device in any one of the first aspect or the possible implementations of the first aspect to execute the group of computer instructions, the processor performs the operation steps of the data processing method in any one of the first aspect or the possible implementations of the first aspect.

According to a fourth aspect, a computer-readable storage medium is provided, including computer software instructions. When the computer software instructions are run in a data processing system, the data processing system is enabled to perform the operation steps of the method according to any one of the first aspect or the possible implementations of the first aspect.

According to a fifth aspect, a computer program product is provided. When the computer program product runs on a computer, a data processing system is enabled to perform the operation steps of the method according to any one of the first aspect or the possible implementations of the first aspect.

In this application, based on the implementations according to the foregoing aspects, the implementations may be further combined to provide more implementations.

## BRIEF DESCRIPTION OF DRAWINGS

FIG. 1 is a schematic diagram of a structure of a neural network according to this application;
FIG. 2 is a schematic diagram of a structure of a convolutional neural network according to this application;
FIG. 3 is a schematic diagram of an architecture of a data processing system according to this application;
FIG. 4 is a flowchart of a method of generating class groups according to this application;
FIG. 5 is a schematic flowchart of a data processing method according to this application;
FIG. 6 is a schematic diagram of a process of label prediction according to this application;
FIG. 7 is a schematic diagram of a structure of a system according to this application;
FIG. 8 is a schematic diagram of a data processing apparatus according to this application; and
FIG. 9 is a schematic diagram of a structure of another system according to this application.

## DESCRIPTION OF EMBODIMENTS

For ease of understanding, the following first describes related terms and concepts such as a neural network in embodiments of this application.

(1) Neural network

The neural network may include neurons, and the neurons may be operation units that use $x_s$ and an intercept 1 as inputs. An output of the operation units meets the following formula (1):

$$h_{W,b}(x) = f\left(W^T x\right) = f\left(\sum_{s=1}^{n} W_s x_s + b\right) \quad \text{Formula (1)}$$

where s=1, 2, ..., n, n is a natural number greater than 1, $W_s$ is a weight of $x_s$, and b is a bias of the neurons. *f* is an activation function (activation function) of the neurons, and is used for introducing a nonlinear characteristic into the neural network, to convert an input signal in the neurons into an output signal. The output signal of the activation function may be used as an input of a next layer, and the activation function may be a sigmoid function. The neural network is a network constituted by linking a plurality of single neurons together. To be specific, an output of a neuron may be an input of another neuron. The input of each neuron may be connected to a local receptive field of a previous layer, to extract a feature of the local receptive field. The local receptive field may be a region including several neurons. The weight represents strength of connections between different neurons. The weight determines influence of the input on the output. A weight close to 0 means that the input is changed but the output is not changed. A negative weight means that the input is increased and the output is decreased.

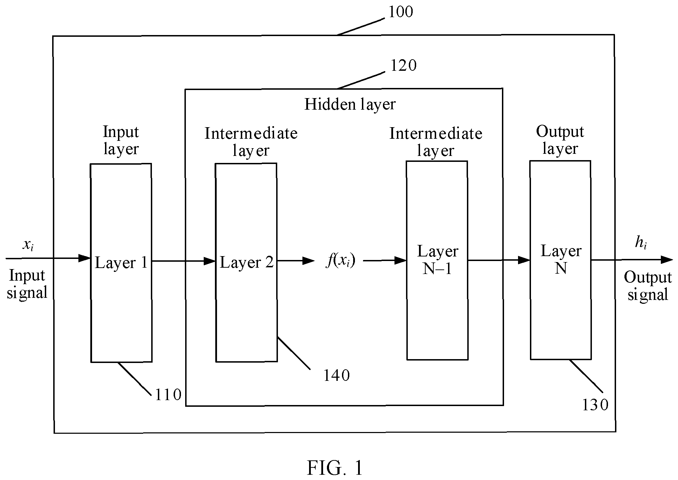

FIG. 1 is a schematic diagram of a structure of a neural network according to an embodiment of this application. A neural network 100 includes N processing layers, where N is an integer greater than or equal to 3. The first layer of the neural network 100 is an input layer 110, and is responsible for receiving an input signal. The last layer of the neural network 100 is an output layer 130, and is responsible for outputting a processing result of the neural network. Other layers except the first layer and the last layer are intermediate layers 140. The intermediate layers 140 jointly form a hidden layer 120. Each intermediate layer 140 of the hidden layer 120 may receive the input signal, and may also output a signal. The hidden layer 120 is responsible for processing the input signal. Each layer represents a logical level of signal processing. Through a plurality of layers, a data signal may be processed by multilevel logic.

In some feasible embodiments, the input signal of the neural network may be a signal in various forms, such as a video signal, a voice signal, a text signal, an image signal, and a temperature signal. The image signal may be various sensor signals such as a landscape signal shot by a camera (image sensor), an environmental image signal captured by a monitor device, and a face image signal obtained by an access control system. The input signal of the neural network further includes various other engineering signals that can be processed by a computer. Examples are not listed one by one herein. If the neural network is used for performing deep learning on the image signal, quality of an image processed by the neural network can be improved.

(2) Deep neural network

The deep neural network (Deep Neural Network, DNN), also referred to as a multi-layer neural network, may be understood as a neural network having a plurality of hidden layers. The deep neural network is classified based on locations of different layers. Neural networks in the deep neural network may be classified into three types: an input layer, a hidden layer, and an output layer. Generally, the first layer is the input layer, the last layer is the output layer, and a middle layer is the hidden layer. The layers are fully connected. To be specific, any neuron at an $i^{th}$ layer is connected to any neuron at an $(i+1)^{th}$ layer.

Although the deep neural network seems complex, it is not complex in terms of work at each layer. Simply speaking, it is shown in the following linear relationship expression: $\vec{y} = \alpha(W\vec{x} + \vec{b})$, where $\vec{x}$ is an input vector, $\vec{y}$ is an output vector, $\vec{b}$ is a bias vector, W is a weight matrix (also referred to as a coefficient), and $\alpha()$ is an activation function. At each layer, the output vector $\vec{y}$ is obtained by performing such a simple operation on the input vector $\vec{x}$. Because the deep neural network includes a large quantity of layers, there are also a large quantity of coefficients $W$ and bias vectors $\vec{b}$. The parameters are defined in the deep neural network as follows: In an example in which the coefficient $W$ is used, it is assumed that in a three-layer deep neural network, a linear coefficient from a fourth neuron at the second layer to a second neuron at the third layer is defined as $W_{24}^{3}$, where the superscript 3 represents a layer at which the coefficient $W$ is located, and the subscripts correspond to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter $W$ at the input layer. In the deep neural network, more hidden layers allow the network to be more capable of describing a complex case in the real world. Theoretically, a model with more parameters has higher complexity and a larger "capacity". This indicates that the model can complete a more complex learning task. A process of training the deep neural network is a process of learning the weight matrix, and a final objective of training is to obtain weight matrices (weight matrices formed by vectors $W$ at many layers) of all layers of a trained deep neural network.

(3) Convolutional neural network

The convolutional neural network (Convolutional Neuron Network, CNN) is a deep neural network with a convolutional structure. The convolutional neural network includes a feature extractor including a convolutional layer and a sub-sampling layer. The feature extractor may be considered as a filter. A convolution process may be considered as performing convolution by using a trainable filter and an input image or a feature map (feature map). The convolutional layer is a neuron layer that is in the convolutional neural network and at which convolution processing is performed on an input signal. At the convolutional layer of the convolutional neural network, one neuron may be connected only to some adjacent-layer neurons. One convolutional layer may output several feature maps, and the feature maps may be an intermediate result in a calculation process of the convolutional neural network. Neurons with a same feature map share a weight, and the shared weight herein is a convolution kernel. Weight sharing may be understood as that an image information extraction manner is irrelevant to a location. That is, statistical information of a part of an image are the same as those of other parts. This means that image information learned in a part can also be used in another part. Therefore, the same image information obtained through learning can be used for all locations on the image. At a same convolutional layer, a plurality of convolution kernels may be used for extracting different image information. Usually, a larger quantity of convolution kernels indicates richer image information reflected in a convolution operation.

The convolution kernel may be initialized in a form of a matrix of a random size. In a training process of the convolutional neural network, the convolution kernel may obtain a reasonable weight through learning. In addition, a benefit directly brought by the weight sharing is that connections among layers of the convolutional neural network are reduced, and an overfitting risk is reduced at the same time.

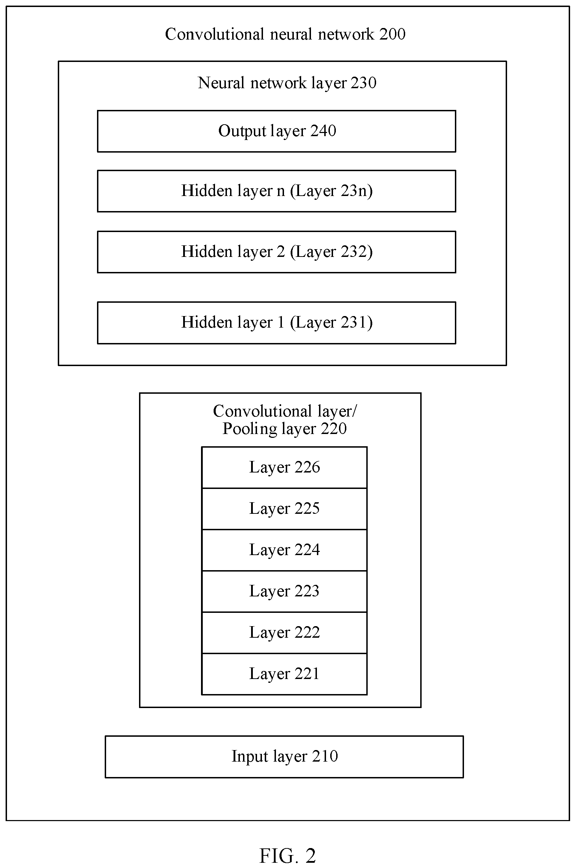

For example, FIG. 2 is a schematic diagram of a structure of a convolutional neural network according to an embodiment of this application. A convolutional neural network 200 may include an input layer 210, a convolutional layer/pooling layer 220 (where the pooling layer is optional), and a neural network layer 230.

The convolutional layer/pooling layer 220 may include, for example, a layer 221 to a layer 226. In an example, the layer 221 may be, for example, the convolutional layer, the layer 222 may be, for example, the pooling layer, the layer 223 may be, for example, the convolutional layer, the layer 224 may be, for example, the pooling layer, the layer 225 may be, for example, the convolutional layer, and the layer 226 may be, for example, the pooling layer. In another example, the layer 221 and the layer 222 may be, for example, the convolutional layers, the layer 223 may be, for example, the pooling layer, the layer 224 and the layer 225 may be, for example, the convolutional layers, and the layer 226 may be, for example, the pooling layer. An output of the convolutional layer may be used as an input of the subsequent pooling layer, or may be used as an input of another convolutional layer to continue the convolution operation.

The following uses the convolutional layer 221 as an example to describe an internal working principle of one convolutional layer.

The convolutional layer 221 may include a plurality of convolution operators, and the convolution operators may also be referred to as kernels. The convolution operators are equivalent to a filter that extracts specific information from an input image matrix in image processing. The convolution operators may be essentially a weight matrix, and the weight matrix is usually predefined. In a process of performing the convolution operation on an image, the weight matrix usually processes pixels at a granularity level of one pixel (or two pixels, depending on a value of a stride (stride)) in a horizontal direction on an input image, to extract a specific feature from the image. A size of the weight matrix is related to a size of the image. It should be noted that a depth dimension (depth dimension) of the weight matrix is the same as that of the input image. In a process of performing convolution calculation, the weight matrix extends to an entire depth of the input image. Therefore, a convolutional output of a single depth dimension is generated through convolution with a single weight matrix. However, in most cases, the single weight matrix is not used, but a plurality of weight matrices with a same size (rows x columns), namely, a plurality of homotypic matrices, are applied. Outputs of the weight matrices are stacked to form a depth dimension of a convolutional image. Different weight matrices may be used for extracting different features from the image. For example, one weight matrix is used for extracting edge information of the image, another weight matrix is used for extracting a specific color of the image, and a further weight matrix is used for blurring unnecessary noise in the image. Sizes of the plurality of weight matrices (rows x columns) are the same. Sizes of a plurality of feature maps extracted from the plurality of weight matrices with the same size are also the same, and then the plurality of extracted feature maps with the same size are combined to form an output of the convolution calculation.

Weight values in the weight matrices need to be obtained through a lot of training during actual application. Each weight matrix formed by using the weight values obtained through the training may be used for extracting information from the input image, to enable the convolutional neural network 200 to perform correct prediction.

When the convolutional neural network 200 includes a plurality of convolutional layers, a large quantity of general features are usually extracted from an initial convolutional layer (for example, the layer 221), and the general features may also be referred to as low-level features. As a depth of the convolutional neural network 200 increases, a feature extracted from a subsequent convolutional layer (for example, the layer 226) becomes increasingly complex, where for example, a feature such as a high-level semantic is extracted, and a feature with a higher semantic level is more applicable to a to-be-resolved problem.

Because a quantity of training parameters usually needs to be reduced, the pooling layer usually needs to be periodically introduced after the convolutional layer. In an example in which the convolutional layer/pooling layer 220 shown in FIG. 2 is used, layers from the layer 221 to the layer 226 may be one convolution layer followed by one pooling layer, or may be a plurality of convolution layers followed by one or more pooling layers. During a process of the image processing, the pooling layer is only used for reducing a space size of the image. The pooling layer may include an average pooling operator and/or a maximum pooling operator, to perform sampling on the input image to obtain an image with a smaller size. The average pooling operator may be used for calculating pixel values in the image in a specific range, to generate an average value, and the average value is used as an average pooling result. The maximum pooling operator may be used for selecting a pixel with a maximum value in the specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents the average value or the maximum value of a corresponding sub-region of the image input to the pooling layer.

After processing performed at the convolutional layer/pooling layer 220, the convolutional neural network 200 is not ready to output required output information. As described above, the feature is extracted from the convolutional layer/pooling layer 220, and the parameters brought by the input image are reduced. However, to generate final output information (required class information or other related information), the convolutional neural network 200 needs to use the neural network layer 230 to generate an output of one or a group of required classes. Therefore, the neural network layer 230 may include a plurality of hidden layers (layers 231, 232, ..., and 23n shown in FIG. 2) and an output layer 240. Parameters included in the plurality of hidden layers may be obtained through pre-training based on related training data of a specific task type. For example, the task type may include image recognition, image classification, and super-resolution image reconstruction.

The layer after the plurality of hidden layers in the neural network layer 230, namely, the last layer of the entire convolutional neural network 200, is the output layer 240. The output layer 240 has a loss function similar to that of a classification cross entropy, and is specifically configured to calculate a predicted error. Once forward propagation (where propagation in a direction from the layer 210 to the layer 240 shown in FIG. 2 is the forward propagation) of the entire convolutional neural network 200 is complete, back propagation (where propagation in a direction from the layer 240 to the layer 210 shown in FIG. 2 is the back propagation) starts to update the weight value of each layer mentioned above and an error, to reduce a loss of the convolutional neural network 200, and reduce an error between an ideal result and a result output by the convolutional neural network 200 through the output layer.

It should be noted that the convolutional neural network 200 shown in FIG. 2 is merely used as an example of a convolutional neural network. During specific application, the convolutional neural network may alternatively exist in a form of another network model.

(4) Loss function

In the process of training the deep neural network, because it is expected that an output of the deep neural network is as close as possible to a predicted value that is actually expected, a predicted value of the network and a target value that is actually expected may be compared, and then a weight vector of each layer of the neural network is updated based on a difference between the predicted value and the target value (where it is clear that there is usually an initialization process before the first update, to be specific, parameters are preconfigured for all layers of the deep neural network). For example, if the predicted value of the network is high, the weight vector is adjusted to decrease the predicted value, and adjustment is consecutively performed, until the deep neural network can predict the target value that is actually expected or a value that is very close to the target value that is actually expected. Therefore, "how to obtain, through comparison, the difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(5) Back propagation algorithm

The convolutional neural network may correct a value of a parameter in an initial super-resolution model in a training process based on an error back propagation (back propagation, BP) algorithm, so that an error loss of reconstructing the super-resolution model becomes smaller. Specifically, an input signal is transferred forward until the error loss occurs at an output, and the parameter in the initial super-resolution model is updated based on back propagation of error loss information, to make the error loss converge. The back propagation algorithm is a back propagation motion dominated by the error loss, and intends to obtain a parameter, such as the weight matrix, of an optimal super-resolution model.

The data processing method provided in this application mainly includes: obtaining a first training set based on an application scenario feature of data collected by a first edge device and sample data associated with the application scenario feature of the data collected by the first edge device, and obtaining a trained first neural network by using the first training set to train a first neural network deployed on the first edge device. The first training set obtained by a cloud-side device includes the data of the first edge device and the sample data associated with the application scenario feature. Therefore, in comparison with a limitation of sample data included in an incremental training set, the sample data for iterative training is added, and in comparison with broadness of sample data included in a full training set, data irrelevant to the application scenario feature is reduced. Therefore, data processing precision of an iteratively trained neural network is effectively improved.

The following describes the implementations of embodiments of this application in detail with reference to accompanying drawings.

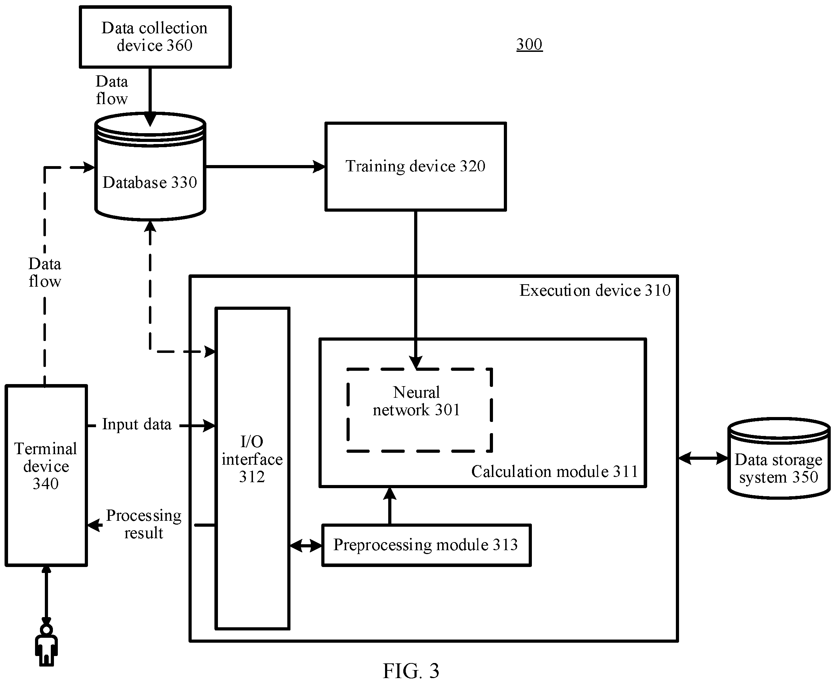

FIG. 3 is a schematic diagram of an architecture of a data processing system according to an embodiment of this application. As shown in FIG. 3, a system 300 includes an execution device 310, a training device 320, a database 330, a terminal device 340, a data storage system 350, and a data collection device 360.

The execution device 310 may be a terminal, such as a mobile phone terminal, a tablet, a laptop computer, a virtual reality (virtual reality, VR) device, an augmented reality (augmented reality, AR) device, a mixed reality (Mixed Reality, MR) device, an extended reality (Extended Reality, ER) device, a camera, or a vehicle-mounted terminal, or may be an edge device (for example, a box carrying a chip that has a processing capability), or the like.

The training device 320 may be a server, a cloud device, or the like. The training device 320 has a strong computing capability, and can run a neural network and perform computing such as training on the neural network.

In a possible embodiment, the execution device 310 and the training device 320 are different processors deployed on different physical devices (for example, servers or servers in a cluster). For example, the execution device 310 may be a graphics processing unit (graphics processing unit, GPU), a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like. The training device 320 may be a graphics processing unit (graphics processing unit, GPU), a neural network processing unit (neural network processing unit, NPU), a microprocessor, an application-specific integrated circuit (application-specific integrated circuit, ASIC), or one or more integrated circuits configured to control program execution in the solutions of this application.

The data collection device 360 is configured to: collect training data, and store the training data in the database 330. The training data includes data in at least one form of an image, a voice, or a text. For example, the training data includes a training image and a target in the training image, where the target in the training image may be a label of the training image.

The training device 320 is configured to: train the neural network by using the training data, until a loss function in the neural network converges, and if a value of the loss function is less than a specific threshold, training of the neural network is completed, so that the neural network reaches specific precision. Alternatively, if all training data in the database 330 is used for training, training of the neural network is completed, so that a trained neural network has a function such as identification or classification. Further, the training device 320 configures the trained neural network 301 to the execution device 310. The execution device 310 is configured to implement a function of processing application data based on the trained neural network 301.

In some embodiments, the training device 320 may configure the trained neural network 301 to a plurality of execution devices 310. Each execution device 310 implements the function such as the identification or the classification by using the trained neural network 301.

For example, in an autonomous driving scenario, in a process in which an autonomous vehicle travels based on a predetermined route, the neural network is mainly used for identifying a roadmap, a driving reference object, an obstacle on a road, and the like in an environment, to ensure that the autonomous vehicle travels safely and accurately. The roadmap may include a graphic or text roadmap. The driving reference object may be a building or a plant. The obstacle on the road may include a dynamic object (for example, an animal) or a static object (for example, a static vehicle).

For another example, in a monitoring scenario, the neural network is mainly used for identifying a target (for example, a vehicle or a user) in an environment such as an intersection or a campus.

For another example, in a natural language processing scenario, the neural network is mainly used for identifying a voice or a text.

To improve data processing precision of the neural network, the training device 320 may further perform iterative training on the neural network based on the training data maintained by the database 330 and the application data provided by the execution device 310. It may be understood that the iterative training is any training performed after the first training of the neural network.

The training data maintained by the database 330 may be a full training set, and includes application data obtained in different application scenarios. The data in different application scenarios has different or dissimilar application scenario features. If a training set used by the training device 320 to perform the iterative training on the neural network includes the data having different or dissimilar application scenario features, it is difficult for the neural network to process the application data in different application scenarios in high precision to achieve an optimal effect.

For example, in the autonomous driving scenario, when the autonomous vehicle passes through a boom barrier in a clear sky environment, the application data may be an adequately clear license plate image, and the application scenario feature includes adequate light and a sunny day. For another example, when the autonomous vehicle passes through the boom barrier in a heavy rainy environment, because a sight line is unclear in a rainy day, the application data may be a blurred license plate image, and the application scenario feature includes inadequate light and the rainy day. Therefore, the application scenario feature of the adequately clear license plate image is different from the application scenario feature of the blurred license plate image. Data having the application scenario feature of the adequate light and the sunny day affects precision of processing, by the neural network, data having the application scenario feature of the inadequate light and the rainy day. Similarly, the data having the application scenario feature of the inadequate light and the rainy day affects precision of processing, by the neural network, the data having the application scenario feature of the adequate light and the sunny day.

For another example, in a scenario of a turnstile, a passenger flow is large during peak hours, and the application data may be the large passenger flow. The application scenario feature may include a peak hour period and the passenger flow. The passenger flow is small during off-peak hours, and the application data may be the small passenger flow. The application scenario feature may include an off-peak period and the passenger flow. A difference between the application scenarios of the peak hours and the off-peak hours lies in the peak hour period and the off-peak hour period. Data of the peak hour period affects precision of processing, by the neural network, data of the off-peak hour period. Similarly, the data of the off-peak hour period affects precision of processing, by the neural network, the data of the peak hour period.

Therefore, the application scenario feature includes at least an environment feature (for example, a temperature, humidity, or light), a time feature (for example, a daytime period, a night period, a traffic peak period, or a traffic off-peak period), a texture feature, a shape feature, a spatial relationship feature, and the like.

For a neural network deployed on an edge device, for example, a first neural network deployed on a first edge device, the training device 320 is further configured to: select, based on an application scenario feature of data provided by the first edge device on which the first neural network is deployed, data that has similar application scenario features from the training data maintained in the database 330, to obtain a first training set, and train the first neural network by using the first training set. The edge device may be a terminal, such as a mobile phone terminal, a tablet, a laptop computer, a VR device, an AR device, an MR device, an ER device, a camera, or a vehicle-mounted terminal. For example, the edge device may be the foregoing execution device 310. When the edge device is located in different application scenarios, data collected by the edge device has different or dissimilar application scenario features. When the edge device is located in similar application scenarios, the data collected by the edge device has similar application scenario features. For example, in different intersection monitoring scenarios, data collected during a peak hour period has a feature of a large passenger flow during the peak hour period, and data collected during a night period has a feature of an unclear image. Therefore, the data that has similar application scenario features is selected from the training data. In comparison with a limitation of training the first neural network by using the data provided by the first edge device, the data for training the first neural network is added, and in comparison with broadness of using the training data maintained in the database 330, data irrelevant to the application scenario feature is reduced. Therefore, the data processing precision of an iteratively trained neural network is effectively improved.

Data included in the first training set comes from the data collected by the first edge device on which the first neural network is deployed and data collected by edge devices in a first class group to which the first edge device belongs. Data collected by edge devices in a same class group has similar application scenario features. On the contrary, data collected by edge devices in different class groups has different application scenario features. Before performing the iterative training on the neural network by using the data collected by the edge devices in the class groups, the training device 320 first classifies edge devices in a system into a plurality of class groups based on a classification policy. For example, device similarity is determined based on the application scenario feature of the training data maintained in the database 330, and the edge devices are classified into the plurality of class groups based on the device similarity. Each class group includes at least two edge devices. The plurality of class groups include the first class group. It may be understood that the training data maintained in the database 330 includes application data provided by the edge devices in the system.

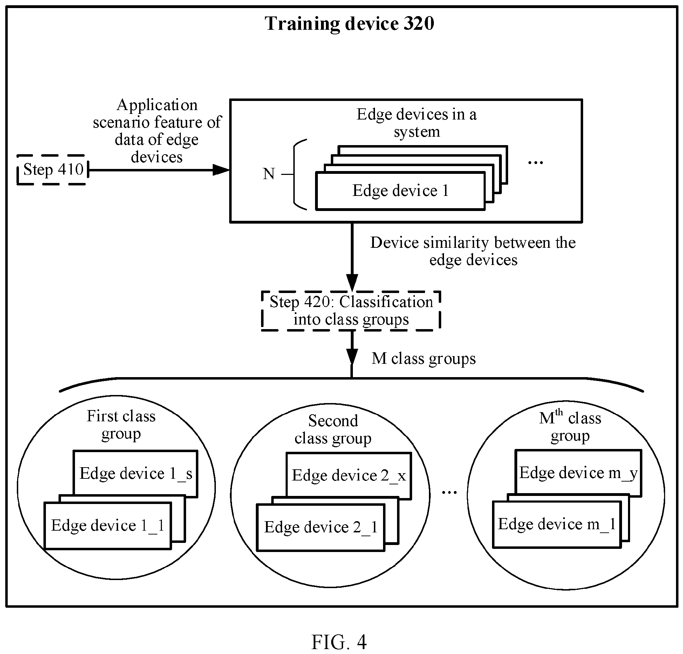

For example, as shown in FIG. 4, a specific process of generating class groups is described.

Step 410: The training device 320 determines device similarity between any two edge devices based on application scenario features of the data of the edge devices in the system.

For any two edge devices in the system, the training device 320 first determines feature similarity based on application scenario features of data of the two edge devices, and determines the device similarity between the two edge devices based on the feature similarity. For example, the training device 320 selects N frames of representative images from data provided by an edge device a, and selects N frames of representative images from data provided by an edge device b. The training device 320 determines device similarity between the two edge devices based on feature similarity between any two of the N frames of the representative images of the edge device a and the N frames of the representative images of the edge device b. The device similarity between the edge devices meets the following formula (2):

$$S_{a,b} = \frac{\sum_{m=1}^{N_a} \sum_{k=1}^{N_b} s(f_a^m, f_b^k)}{N_a * N_b} \quad \text{Formula (2)}$$

where $S_{a,b}$ represents the device similarity between the edge device a and the edge device b, $N_a$ represents a quantity of frames of the representative images provided by the edge device a, $N_b$ represents a quantity of frames of the representative images provided by the edge device b, and $s(f_a^m, f_b^k)$ represents the feature similarity between the two frames of the representative images. $\sum_{m=1}^{N_a} \sum_{k=1}^{N_b} s(f_a^m, f_b^k)$ represents a sum of feature similarity of any two of the N frames of the representative images of the edge device a and the N frames of the representative images of the edge device b.

The feature similarity of the two frames of the representative images may be cosine similarity. $s(f_a^m, f_b^k)$ meets formula (3).

$$s(f_a^m, f_b^k) = \frac{f_a^m \cdot f_b^k}{\left\| f_a^m \right\| \left\| f_b^k \right\|} \quad \text{Formula (3)}$$

For example, the training device 320 selects, based on an inter-frame difference method, an optical flow method, or the like, a representative image from image data provided by each edge device in the system, where the representative image includes a static background frame and a motion image frame.

The application scenario feature may alternatively be an intermediate result in a data processing process of a neural network. The training device 320 may determine the feature similarity based on the application scenario feature. The training device 320 extracts a feature, for example, by using a feature extraction model or scale invariant feature transform (Scale invariant feature transform, SIFT). The application scenario feature may be obtained by the training device 320 by analyzing the data provided by the edge device. Alternatively, the database 330 maintains an application scenario feature in the application scenario of the data provided by the edge device.

Optionally, the training device 320 may perform dimension reduction on the representative image, and extract a feature of a dimension-reduced representative image, to reduce a calculation amount of calculating the feature similarity.

Step 420: The training device 320 classifies the edge devices in the system into a plurality of class groups based on the device similarity between the edge devices in the system.

The training device 320 performs clustering on the edge devices in the system based on the device similarity between any two edge devices in the system, to obtain a clustering result. The clustering result indicates a group relationship of scenario similarity of the edge devices in the system. For example, as shown in FIG. 4, it is assumed that the system includes N edge devices. The training device 320 classifies the edge devices in the system into M class groups based on the device similarity between the N edge devices in the system. The clustering result includes the M class groups, where M is an integer greater than or equal to 2. A first class group includes an edge device 1_1 to an edge device 1_s, a second class group includes an edge device 2_1 to an edge device 2_x, and an Mth class group includes an edge device m_1 to an edge device m_y, where s, x and y are all integers greater than or equal to 2. Edge devices in a class group are configured to process data in similar application scenarios, and the data processed by the edge devices in the class group has similar application scenario features. Quantities of edge devices included in class groups may be the same or may be different. This is not limited.

For example, the application scenario features include a sunny day and a rainy day. The edge devices in the first class group are configured to process data in a scenario of the sunny day, and data collected by the edge devices in the first class group has the application scenario feature of the sunny day. The edge devices in the second class group are configured to process data in a scenario of the rainy day, and data collected by the edge devices in the second class group has the application scenario feature of the rainy day.

A clustering algorithm includes a k-means clustering (k-means clustering, K-means) algorithm, a density-based clustering (density-based spatial clustering of applications with noise, DBSCAN) algorithm, an agglomerative hierarchical clustering (agglomerative hierarchical clustering, AHC) algorithm, a statistical information grid clustering (statistical information grid, STING) algorithm, an expectation-maximization (expectation-maximization algorithm, EM) algorithm, and the like.

Selection principles of the clustering algorithm include: (1) A quantity of clusters do not need to be specified. (2) An existing data point is used as a clustering center, but a new clustering center is not generated. (3) There is no need to randomly select an initial value and execute the clustering algorithm for a plurality of times, and an obtained result is stable. (4) It is suitable for fast clustering of high-dimensional and multi-type data. An algorithm that complies with the foregoing principles, such as an affinity propagation (Affinity Propagation, AP) clustering algorithm, can implement clustering of corresponding features.

Optionally, data collected by the edge device in different time periods has different or dissimilar application scenario features. For example, definition of images collected by the edge device in three different time periods: day, dusk, and night periods, may be different. Therefore, in a process in which the training device 320 determines the plurality of class groups based on the device similarity between the edge devices in the system, a similarity relationship between an application scenario feature related to a time period is finely mined, so that types of the class groups are enriched, and accuracy of data selected by the training neural network is improved.

After generating the plurality of class groups according to step 410 to step 420, the training device 320 stores a relationship between the plurality of class groups and information (for example, an identifier of the edge device) about the edge device included in the class groups, so that when the training device 320 needs to perform iterative training on the neural network deployed on the edge device, the training device 320 obtains, based on the class groups, data used for training. In this way, data processing precision of an execution device 310 based on an iteratively trained neural network is improved.

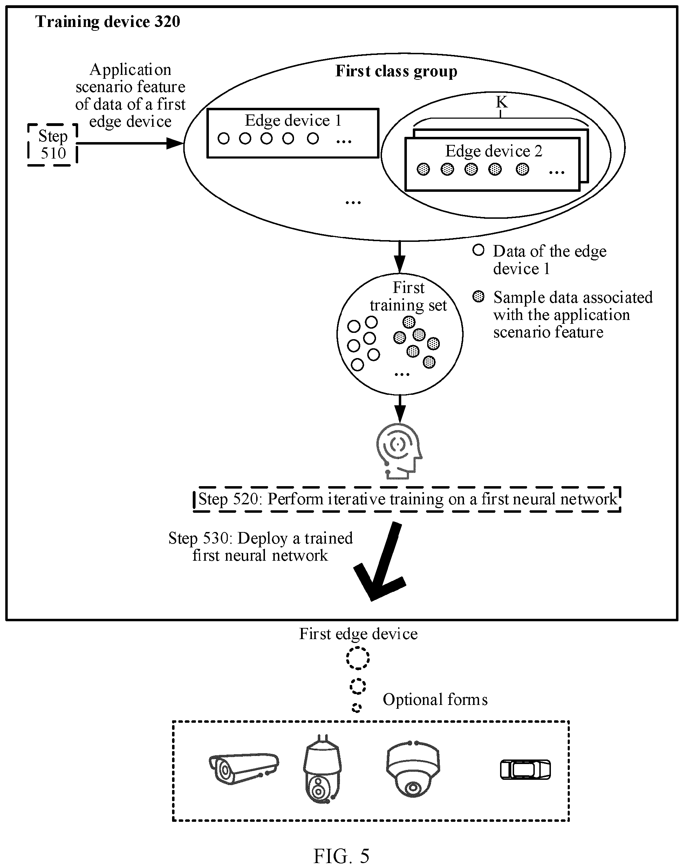

For a specific method for obtaining, by the training device 320, the data used by the iteratively trained neural network, refer to the following descriptions in FIG. 5.

It should be noted that, in actual application, training data maintained in the database 330 is not necessarily collected by the data collection device 360, but may be received from another device. In addition, the training device 320 does not necessarily train the neural network completely based on the training data maintained in the database 330, and may also obtain the training data from a cloud or another place to train the neural network. The foregoing descriptions should not be construed as a limitation on this embodiment of this application.

Further, based on a function performed by the execution device 310, the execution device 310 may be further classified into an architecture shown in FIG. 3. As shown in the figure, the execution device 310 is configured with a calculation module 311, an I/O interface 312, and a preprocessing module 313.

The I/O interface 312 is configured to perform data exchange with an external device. A user may input data to the I/O interface 312 through a terminal device 340. The input data may include an image or a video. In addition, the input data may alternatively come from the database 330.

The preprocessing module 313 is configured to perform preprocessing based on the input data received by the I/O interface 312. In this embodiment of this application, the preprocessing module 313 may be configured to identify an application scenario feature of application data received from the I/O interface 312.

In a process in which the execution device 310 preprocesses the input data, the calculation module 311 in the execution device 310 performs calculation, or the like, the execution device 310 may invoke data, code, and the like in the data storage system 350 for corresponding processing, and may further store, in the data storage system 350, data, instructions, and the like that are obtained through the corresponding processing.

For example, the first neural network stored in the execution device 310 may be applied to the execution device 310. After the execution device 310 obtains the application data, the calculation module 311 inputs the application data into the first neural network to obtain a processing result. Because the first neural network is obtained by the training device 320 through training based on the data that is obtained based on the class groups and that has similar application scenario features, processing the application data by using the first neural network can meet a precision requirement of the user for data processing.

Finally, the I/O interface 312 returns the processing result to the terminal device 340, to provide the processing result for the user, so that the user can view the processing result.

In the case shown in FIG. 3, the user may manually specify the input data, and the user may specify the input data on an interface provided by the I/O interface 312. In another case, the terminal device 340 may automatically send the input data to the I/O interface 312. If the terminal device 340 needs to obtain authorization from the user to automatically send the input data, the user may set corresponding permission on the terminal device 340. The user can view, on the terminal device 340, the result output by the execution device 310. A specific presentation form may be a specific manner such as display, sound, or action. The terminal device 340 may also serve as a data collection end, collect the input data input to the I/O interface 312 and the processing result output from the I/O interface 312 that are shown in the figure as new sample data, and store the new sample data in the database 330. It is clear that the terminal device 340 may alternatively not perform collection, but the I/O interface 312 directly stores, as the new sample data into the database 330, the input data input to the I/O interface 312 and the processing result output from the I/O interface 312 that are shown in the figure.

FIG. 3 is merely a schematic diagram of a system architecture according to an embodiment of this application. A location relationship between a device, a component, a module, and the like shown in FIG. 3 constitutes no limitation. For example, in FIG. 3, the data storage system 350 is an external memory relative to the execution device 310. In another case, the data storage system 350 may alternatively be disposed in the execution device 310.

The following describes in detail the data processing method provided in embodiments of this application with reference to FIG. 5 to FIG. 9. FIG. 5 is a schematic flowchart of a data processing method according to an embodiment of this application. Herein, it is assumed that an example in which a training device 320 needs to perform iterative training on a first edge device is used for description. The first edge device may be any edge device in a system. As shown in FIG. 5, the method includes the following steps.

Step 510: The training device 320 obtains a first training set based on an application scenario feature of data of the first edge device.

The training device 320 classifies edge devices in the system into a plurality of class groups according to step 410 and step 420, and data of the edge devices in a class group has similar application scenario features. When the training device 320 needs to perform the iterative training on a first neural network deployed on the first edge device, the training device 320 may determine, based on the application scenario feature of the data collected by the first edge device, a first class group to which the first edge device belongs, and obtain the first training set based on data of edge devices in the first class group. The first training set includes the data of the first edge device and sample data associated with the application scenario feature. The sample data associated with the application scenario feature may be provided by another edge device than the first edge devices in the first class group.

In some embodiments, a database 330 maintains an association relationship between the edge device and the class group, and the training device 320 may determine, based on the association relationship between the edge device and the class group, the first class group to which the first edge device belongs.

For example, the database 330 maintains an association relationship between the application scenario feature and a class group identifier. The training device 320 may determine, based on the association relationship between the application scenario feature and the class group identifier, an identifier of the first class group associated with the application scenario feature of the data of the first edge device, so that the training device 320 obtains the first class group based on the identifier of the first class group.

For another example, the database 330 maintains an association relationship between an identifier of the edge device and a class group identifier. The training device 320 may determine, based on the association relationship between the identifier of the edge device and the class group identifier, an identifier of the first class group associated with the identifier of the first edge device, so that the training device 320 obtains the first class group based on the identifier of the first class group.

In some other embodiments, the training device 320 may obtain the first training set based on the data of some edge devices in the first class group.

For example, the training device 320 determines K edge devices based on device similarity between the edge devices in the first class group, and obtains the first training set based on the data provided by the first edge device and data provided by the K edge devices in the first class group. The K edge devices may also be referred to as K adjacent devices of the first edge device. The training device 320 may determine the K adjacent devices from the first class group in descending order of device similarity between the edge devices. The similarity indicates a degree of similarity between application scenario features of application data collected by two edge devices. K is an integer greater than or equal to 1, and K is less than a quantity of edge devices included in the first class group.

For another example, the training device 320 may pre-generate an adjacent device list based on the device similarity between the edge devices in the first class group. The training device 320 may query the adjacent device list to determine the K edge devices. In an example, the adjacent devices may be presented in a form of a table. It is assumed that the first class group includes a device 1 to a device 7. As shown in Table 1, the adjacent devices of the devices in the class group are shown.

**Table 1**

| Device in a class group | K adjacent devices in the class group |
| --- | --- |
| Device 1 | Device 2, device 3, and device 7 |
| Device 2 | Device 1, device 4, and device 5 |
| ... | ... |

It can be learned from Table 1 that the adjacent devices of the device 1 include the device 2, the device 3, and the device 7, and the adjacent devices of the device 2 include the device 1, the device 4, and the device 5. If the first edge device is the device 1, the K adjacent devices of the first edge device include the device 2, the device 3, and the device 7.

It should be noted that Table 1 merely shows a storage form of a correspondence in a storage device in the form of the table, and do not limit the storage form of the correspondence in the storage device. It is clear that the correspondence may alternatively be stored in the storage device in another form. This is not limited in this embodiment of this application.

Step 520: The training device 320 obtains a trained first neural network based on the first training set and the first neural network deployed on the first edge device.

The training device 320 may invoke a neural network deployed on each edge device in the first class group, perform, by using each neural network, semi-supervised training on data provided by K+1 edge devices in the first training set, and classify, based on accuracy of a prediction result, the data provided by the K+1 edge devices in the first training set. Therefore, a workload of manually labeling the data in the first training set is reduced. Refer to Table 2.

**Table 2**

| Type | Rule | Labeling operation |
| --- | --- | --- |
| High-confidence sample | Accuracy is greater than or equal to x% (for example, 80%) | A label (pseudo label) obtained by most model inference are used, and manual labeling is not required |

(continued)

| Type | Rule | Labeling operation |
|---|---|---|
| Uncertain sample | Accuracy is less than or equal to y% (for example, 50%) | Manual labeling |
| Diversified sample | Accuracy is less than x% and greater than y% | Manual labeling is not required |

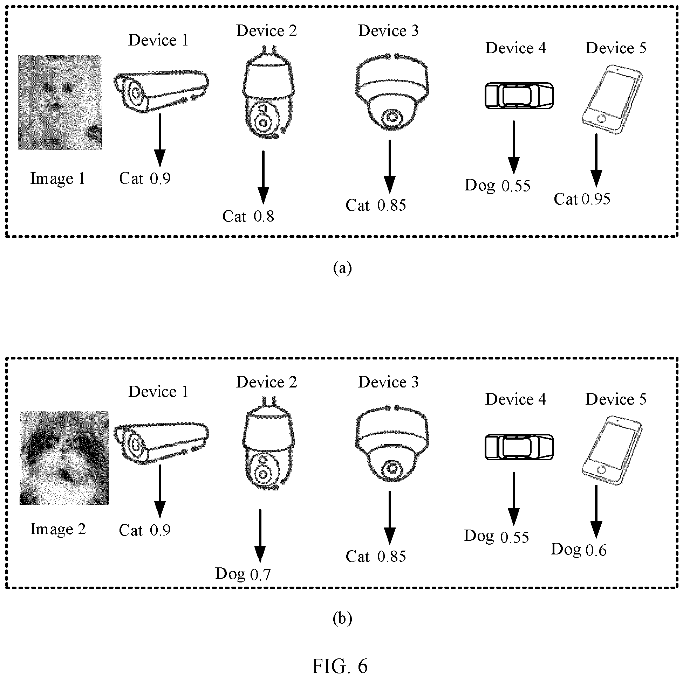

It can be learned from Table 2 that the high-confidence sample indicates that neural networks deployed on the K+1 edge devices process the data with the high accuracy. Training the first neural network by using the high-confidence sample helps improve data processing precision of the first neural network. For example, as shown in (a) in FIG. 6, it is assumed that the K+1 edge devices include the device 1 to the device 5. The training device 320 invokes a neural network deployed on the device 1 to identify an image 1, and a prediction result is that a probability of a cat is 0.9. The training device 320 invokes a neural network deployed on the device 2 to identify the image 1, and a prediction result is that a probability of a cat is 0.8. The training device 320 invokes a neural network deployed on the device 3 to identify the image 1, and a prediction result is that a probability of a cat is 0.85. The training device 320 invokes a neural network deployed on the device 4 to identify the image 1, and a prediction result is that a probability of a dog is 0.55. The training device 320 invokes a neural network deployed on the device 5 to identify the image 1, and a prediction result is that a probability of a cat is 0.95. Because the probabilities of a cat in the prediction results of the device 1, the device 2, the device 3, and the device 5 are all greater than 80%, it indicates that a probability that a target in the image 1 is a cat is high, and the accuracy is high. The image 1 may be a high-confidence sample, and a label of the image 1 may be used as a pseudo label.

The uncertain sample indicates that the neural networks deployed on the K+1 edge devices process data with low accuracy. For example, as shown in (b) in FIG. 6, the training device 320 invokes the neural networks deployed on the device 1 and the device 3 to identify an image 2, and prediction results are that a probability of a cat is greater than 0.8. The training device 320 invokes the neural networks deployed on the device 2, the device 4, and the device 5 to identify the image 2, and prediction results are that a probability of a dog is less than 0.8. Because the probability of a dog in the prediction results of the device 2, the device 4, and the device 5 are all less than 80%, it indicates that a probability that a target in the image 2 is a dog is low, and the accuracy is low. Therefore, the image 2 may be an uncertain sample.

Optionally, the training device 320 may select a training mode based on a type of the sample data. The training mode includes supervised training and the semi-supervised training. The training device 320 performs, based on the first training set, the supervised training or the semi-supervised training on the first neural network deployed on the first edge device, to obtain the trained first neural network.

For example, the training device 320 performs the supervised training on the first neural network based on the high-confidence sample and the uncertain sample that are in the first training set, to obtain the trained first neural network.

For another example, the training device 320 performs the semi-supervised training on the first neural network based on the high-confidence sample, the uncertain sample, and the diversified sample that are in the first training set, to obtain the trained first neural network.

A label of the data included in the first training set is jointly predicted by the neural networks of the K adjacent devices in the class group. A result of high-confidence data with high accuracy is used for the pseudo label. Uncertain data with low accuracy is used for manual labeling. In addition, a batch of diversified data whose average prediction probabilities cover each probability interval as evenly as possible is additionally selected for semi-supervised learning. In this way, in this embodiment of this application, data at three layers: high confidence, uncertainty, and diversity, are provided for the iteratively trained neural network, and then training is performed in the semi-supervised manner. The high-confidence data and the diversified data obtained through data collaboration do not need to be manually labeled. This greatly reduces labeling costs. In addition, data mining at the plurality of layers and the semi-supervised learning are used for fully mining values of labeled and unlabeled data. This improves decision-making and generalization abilities of the neural network.

It should be noted that an occasion at which the training device 320 performs the iterative training on the first neural network may be that the training device 320 receives application data collected by the first edge device or periodically performs the iterative training on the first neural network. It may be understood that after the database 330 obtains new application data fed back by the first edge device, the training device 320 may start to perform the iterative training on the first neural network.

Step 530: The training device 320 deploys the trained first neural network on the first edge device.

After receiving the trained first neural network, the first edge device may process the collected application data by using the trained first neural network, so that precision of a processing result can be effectively improved.

For example, if the first edge device is an intelligent terminal, an application scenario is that the intelligent terminal identifies a user by using an identification function, to implement a function of unlocking the intelligent terminal. The intelligent terminal may photograph the target user by using a camera, to obtain a user image, and the application data is the user image. The first edge device identifies the user image by using the trained first neural network, and unlocks the intelligent terminal as quickly as possible.

For another example, the application scenario is that the intelligent terminal identifies a voice of the user by using a voice assistant function, to implement the function of unlocking the intelligent terminal. The intelligent terminal may obtain the voice of the user by using an audio sensor, to obtain audio data, and the application data is the audio data. The first edge device identifies the audio data by using the trained first neural network, and unlocks the intelligent terminal as quickly as possible.

For another example, if the first edge device is a boom barrier monitor, the application scenario is that the boom barrier monitor performs license plate identification when an autonomous vehicle passes through a boom barrier in a heavy rainy environment. The boom barrier monitor may photograph a license plate of the autonomous vehicle by using a camera, to obtain a license plate image. Because a sight line is unclear in a rainy day, the application data is a blurred license plate image. The first edge device identifies the license plate image by using the trained first neural network, so that the autonomous vehicle can pass through the boom barrier as quickly as possible.

In this way, the K adjacent devices in the class group are used for performing the iterative training on the neural network deployed on the first edge device. Data amplification is provided, and an application scenario of the data is similar to the application scenario of the first edge device. This automatically and effectively adds data of an incremental training set, breaks through a limitation of the incremental training set, improves broadness of a full training set, improves, from a data sample level, usage efficiency of the data used for the iterative training on the neural network, and improves a potential generalization ability of the neural network.

Object detection is an important part of computer vision. The computer vision is an integral part of various intelligent/autonomic systems in various application fields such as manufacturing, inspection, document analysis, medical diagnosis, and military affairs. The computer vision is knowledge about how to use a camera/video camera and a computer to obtain required data and information of a photographed subject. To be vivid, eyes (the camera/video camera) and a brain (an algorithm) are installed on the computer to replace human eyes to identify, track, and measure an object, and the like, so that the computer can perceive an environment. Perceiving may be considered as extracting information from a perceptual signal. Therefore, the computer vision may also be considered as a science of studying how to make an artificial system perceive an image or multi-dimensional data. Generally, the computer vision is to replace a visual organ with various imaging systems to obtain input information, and then replace a brain with the computer to process and interpret the input information. A final study objective of the computer vision is to enable the computer to observe and understand the world through vision in a way that human beings do, and have a capability of automatically adapting to the environment.

An object detection method may be applied to scenarios such as vehicle detection, pedestrian counting, autonomous driving, a security system, and a medical field. For example, in the autonomous driving scenario, in a driving process, an autonomous vehicle identifies an object in a surrounding environment, to adjust a speed and a direction of the autonomous vehicle, so that the autonomous vehicle can safely drive, and a traffic accident is avoided. The object may be another vehicle, a traffic control device, or another type of object. Generally, input data (for example, an image or a video) is input into a neural network having an object detection function. The neural network extracts a feature from the input data, and performs the object detection based on the extracted feature, to obtain a detection result.

The data processing solution provided in this application mainly includes: When performing the iterative training on the first neural network deployed on the first edge device, the cloud-side device obtains the first training set based on the application scenario feature of the data of the first edge device, obtains the trained first neural network based on the first training set and the first neural network deployed on the first edge device, and deploys the trained first neural network on the first edge device. The first training set obtained by the cloud-side device includes the data of the first edge device and the sample data associated with the application scenario feature of the data of the first edge device. In comparison with a limitation of sample data included in the incremental training set, the sample data for iterative training is added, and in comparison with broadness of sample data included in the full training set, data irrelevant to the application scenario feature is reduced. Therefore, the data processing precision of the iteratively trained neural network is effectively improved.

In a possible implementation, a cloud service provider abstracts a function of iteratively training a neural network into a cloud service, and deploys the cloud service in a cloud data center. The user can consult a cloud service platform and purchase the cloud service on the cloud service platform. After purchasing the cloud service, the user may upload an iterative training request to the cloud data center through a terminal device. The cloud data center obtains, based on the first neural network indicated by the iterative training request, data used for the iterative training from the data provided by the edge devices in the first class group, and performs the iterative training on the first neural network.

In another possible implementation, the function of iteratively training a neural network may be encapsulated into a software package by a software provider. The user purchases the software package and deploys the software package on a self-owned server or on a cloud server. For example, the function of iteratively training a neural network is deployed by a tenant in a computing resource (for example, a virtual machine) of a cloud data center leased by the tenant. The tenant purchases, on the cloud service platform, a computing resource cloud service provided by the cloud service provider, and performs the iterative training on the neural network in the purchased computing resource, to perform the foregoing function of iteratively training a neural network. Optionally, data uploaded by the user may be encrypted, to avoid direct contact with the data uploaded by the user without affecting an implementation effect, so that information security is ensured.

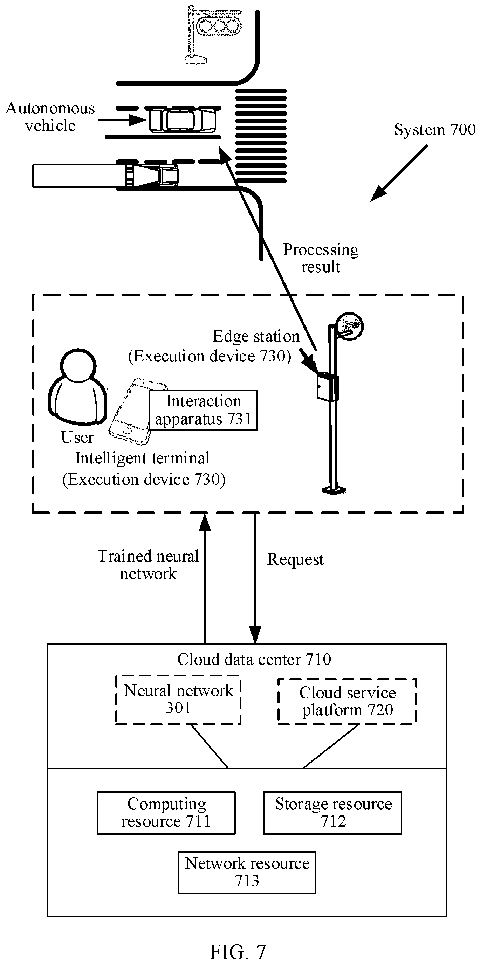

For example, FIG. 7 is a schematic diagram of a structure of a system 700 according to this application. As shown in FIG. 7, the system 700 may be an entity that provides a cloud service for a user by using a basic resource. The system 700 includes a cloud data center 710. The cloud data center 710 includes a device resource pool (including a computing resource 711, a storage resource 712, and a network resource 713) and a cloud service platform 720. The computing resource 711 included in the cloud data center 710 may be a computing device (for example, a server).

An interaction apparatus 731 may be deployed on an execution device 730. The execution device 730 may be a first edge device. The interaction apparatus 731 may be a browser or an application that can implement message interaction with the cloud service platform 720. The user may access the cloud service platform 720 by using the interaction apparatus 731, upload a request to the cloud data center 710, and request to perform iterative training on a neural network 301 deployed on the first edge device, to obtain an iteratively trained neural network. After receiving the request uploaded by the execution device 730, the cloud data center 710 obtains a first training set based on an application scenario feature of data of the first edge device, obtains the trained neural network based on the first training set and a first neural network deployed on the first edge device, and feeds back the iteratively trained neural network to the execution device 730. The execution device 730 may be an intelligent terminal or an edge station. The edge station may process application data of an autonomous vehicle, and transmit a processing result to the autonomous vehicle. The processing result indicates the autonomous vehicle to perform an operation.

The solution of iteratively training the neural network provided in this embodiment of this application is mainly performed by the training device. In another possible implementation, if a computing resource of the edge station can provide adequate computing power for the iterative training on the neural network, the edge station may alternatively perform the iterative training on the neural network, so that a delay of the iterative training on the neural network is reduced. For a specific process of performing the iterative training on the neural network, refer to the foregoing descriptions about FIG. 4 and FIG. 5.

It may be understood that, to implement functions in the foregoing embodiment, the terminal includes corresponding hardware structures and/or software modules for performing all the functions. A person skilled in the art should be easily aware that, in combination with the units and the method steps in the examples described in the embodiments disclosed in this application, this application can be implemented by hardware or a combination of hardware and computer software. Whether a function is performed by the hardware or the hardware driven by the computer software depends on particular application scenarios and design constraints of the technical solutions.

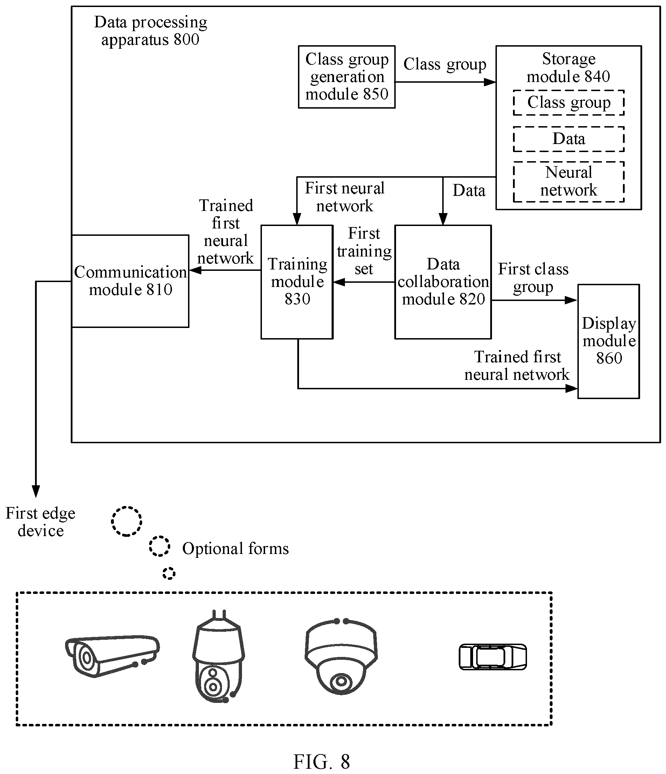

With reference to FIG. 1 to FIG. 7, the foregoing provides detailed descriptions of the data processing method according to this embodiment. With reference to FIG. 8, the following provides descriptions of a data processing apparatus according to this embodiment.

FIG. 8 is a schematic diagram of a structure of a possible data processing apparatus according to this embodiment. Data processing apparatuses may be configured to implement functions of the execution device in the foregoing method embodiment. Therefore, the data processing apparatuses can also implement beneficial effects of the foregoing method embodiments. In this embodiment, the data processing apparatus may be the training device 320 shown in FIG. 3, or may be a module (for example, a chip) applied to a server.

As shown in FIG. 8, a data processing apparatus 800 includes a communication module 810, a data collaboration module 820, a training module 830, and a storage module 840. The data processing apparatus 800 is configured to implement functions of the training device 320 in the method embodiment shown in FIG. 4 or FIG. 5.

The data collaboration module 820 is configured to obtain a first training set based on an application scenario feature of data collected by a first edge device, where the first training set includes the data collected by the first edge device and sample data associated with the application scenario feature. For example, the data collaboration module 820 is configured to perform step 510 in FIG. 5.

The training module 830 is configured to obtain a trained first neural network based on the first training set and a first neural network deployed on the first edge device. For example, the data collaboration module 820 is configured to perform step 520 in FIG. 5.

The communication module 810 is configured to deploy the trained first neural network on the first edge device. For example, the data collaboration module 820 is configured to perform step 530 in FIG. 5.

Optionally, the data collaboration module 820 is specifically configured to: determine a first class group based on the application scenario feature of the data collected by the first edge device, where the first class group includes the first edge device, and data of edge devices in the first class group is the same as or similar to the data of the application scenario feature; and obtain the first training set based on data provided by the edge devices in the first class group.

The data processing apparatus 800 further includes a class group generation module 850 and a display module 860. The class group generation module 850 is configured to classify edge devices in a system into a plurality of class groups based on a classification policy, where the classification policy indicates a classification rule based on device similarity between the edge devices, the plurality of class groups include the first class group, and each class group includes at least two edge devices. For example, the class group generation module 850 is configured to perform step 410 and step 420 in FIG. 4. The display module 860 is configured to display the class groups and the iteratively trained first neural network. The storage module 840 is configured to store the plurality of class groups, the data, a neural network deployed on the edge devices, and an application program required for performing iterative training.

It should be understood that the data processing apparatus 800 in this embodiment of this application may be implemented by a GPU, an NPU, an ASIC, or a programmable logic device (programmable logic device, PLD). The PLD may be a complex programmable logic device (complex programmable logic device, CPLD), a field programmable gate array (field programmable gate array, FPGA), a generic array logic (generic array logic, GAL), or any combination thereof. Alternatively, when the data processing method shown in FIG. 4 or FIG. 5 may be implemented by software, the data processing apparatus 800 and the modules of the data processing apparatus 800 may be software modules.

The data processing apparatus 800 according to this embodiment of this application may correspondingly perform the methods described in this embodiment of this application, and the foregoing and other operations and/or functions of the units in the data processing apparatus 800 are respectively used for implementing corresponding procedures of the methods in FIG. 4 or FIG. 5. For brevity, details are not described herein again.

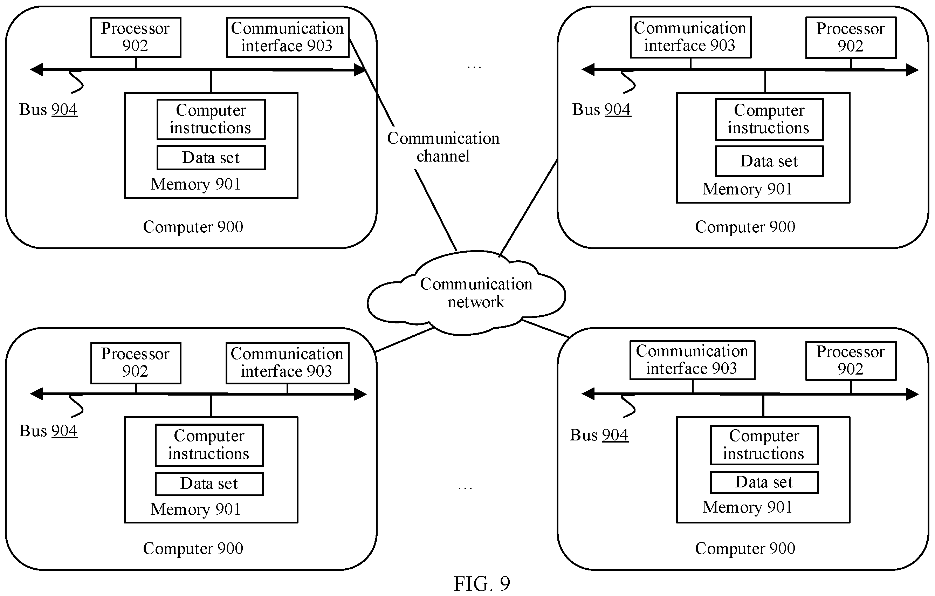

Because the modules in the data processing apparatus 800 provided in this application may be deployed on a plurality of computers in a same environment or different environments in a distributed manner, a data processing system shown in FIG. 9 is further provided in this application. The data processing system includes a plurality of computers 900, where each computer 900 includes a memory 901, a processor 902, a communication interface 903, and a bus 904. Mutual communication connection between the memory 901, the processor 902, and the communication interface 903 is implemented by using the bus 904.

The memory 901 may be a read-only memory, a static storage device, a dynamic storage device, or a random access memory. The memory 901 may store computer instructions. When the computer instructions stored in the memory 901 are executed by the processor 902, the processor 902 and the communication interface 903 are configured to perform some data processing methods of a software system. The memory may further store a data set. For example, a part of storage resources in the memory 901 are classified into an area, and the area is used for storing the class groups and a program for implementing a function of iteratively training a neural network in this embodiment of this application.

The processor 902 may be a general-purpose CPU, an application-specific integrated circuit (application-specific integrated circuit, ASIC), a GPU, or any combination thereof. The processor 902 may include one or more chips. The processor 902 may include an AI accelerator, for example, an NPU.

The communication interface 903 uses a transceiver module, for example but not for limitation, a transceiver, to implement communication between the computer 900 and another device or a communication network. For example, an iterative training request may be obtained by using the communication interface 903, and the iteratively trained neural network may be fed back.

The bus 904 may include a channel for transmitting information between the components (for example, the memory 901, the processor 902, and the communication interface 903) of the computer 900.

A communication channel is established between the computers 900 by the communication network. Any one or more of the data collaboration module 820, the training module 830, and the class group generation module 850 are run on each computer 900. Any computer 900 may be a computer (for example, a server) in a cloud data center, a computer in an edge data center, or a terminal computing device. A function of the training device 320 may be deployed on each computer 900. For example, the GPU is configured to implement the function of the training device 320.

For functions of a training device 320 and an execution device 310 that are deployed in a same computer 900, the training device 320 may communicate with the execution device 310 by using the bus 904. For functions of a training device 320 and an execution device 310 deployed in different computers 900, the training device 320 may communicate with the execution device 310 through the communication network.

The method steps in this embodiment may be implemented by hardware, or may be implemented by the processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. It is clear that the storage medium may alternatively be a component of the processor. The processor and the storage medium may be disposed in the ASIC. In addition, the ASIC may be located in a terminal device. It is clear that the processor and the storage medium may alternatively exist as discrete components in a network device or the terminal device. All or some of the foregoing embodiments may be implemented by software, hardware, firmware, or any combination thereof. When the software is used for implementing the embodiments, all or a part of the embodiments may be implemented in a form of a computer program product. The computer program product includes one or more computer programs or instructions. When the computer programs or instructions are loaded and executed on a computer, all or some of the procedures or functions in this embodiment of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by the computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

   obtaining a first training set based on an application scenario feature of data collected by a first edge device, wherein the first training set comprises the data collected by the first edge device and sample data associated with the application scenario feature;
   obtaining a trained first neural network based on the first training set and a first neural network deployed on the first edge device; and
   deploying the trained first neural network on the first edge device.

2. The method according to claim 1, wherein the obtaining a first training set based on an application scenario feature of data collected by a first edge device comprises:

   determining a first class group based on the application scenario feature of the data collected by the first edge device, wherein the first class group comprises the first edge device, and data of edge devices in the first class group is the same as or similar to the data of the application scenario feature; and
   obtaining the first training set based on the data of the edge devices in the first class group.

3. The method according to claim 2, wherein the obtaining the first training set based on the data of the edge devices in the first class group comprises:

   determining K edge devices based on device similarity between the edge devices in the first class group, wherein the similarity indicates a degree of similarity between application scenario features of data of two edge devices, K is an integer greater than or equal to 1, and K is less than a quantity of edge devices comprised in the first class group; and
   obtaining the first training set based on the data of the first edge device and data of the K edge devices in the first class group.

4. The method according to any one of claims 1 to 3, wherein before the obtaining a first training set based on an application scenario feature of data collected by a first edge device, the method further comprises:
   classifying edge devices in a system into a plurality of class groups based on a classification policy, wherein the classification policy indicates a classification rule based on device similarity between the edge devices, the plurality of class groups comprise the first class group, and each class group comprises at least two edge devices.

5. The method according to claim 4, wherein the device similarity between the edge devices is determined based on an application scenario feature of data of the edge devices in the system in a preset time period.

6. The method according to any one of claims 1 to 5, wherein the application scenario feature comprises at least one of a light feature, a texture feature, a shape feature, and a spatial relationship feature.

7. The method according to any one of claims 1 to 6, wherein the method further comprises:
   displaying the first class group and the trained first neural network.

8. A data processing apparatus, comprising:

   a data collaboration module, configured to obtain a first training set based on an application scenario feature of data collected by a first edge device, wherein the first training set comprises the data collected by the first edge device and sample data associated with the application scenario feature;
   a training module, configured to obtain a trained first neural network based on the first training set and a first neural network deployed on the first edge device; and
   a communication module, configured to deploy the trained first neural network on the first edge device.

9. The apparatus according to claim 8, wherein when obtaining the first training set based on the application scenario feature of the data collected by the first edge device, the data collaboration module is specifically configured to:

   determine a first class group based on the application scenario feature of the data collected by the first edge device, wherein the first class group comprises the first edge device, and data of edge devices in the first class group is the same as or similar to the data of the application scenario feature; and
   obtain the first training set based on the data of the edge devices in the first class group.

10. The apparatus according to claim 9, wherein when obtaining the first training set based on the data of the edge devices in the first class group, the data collaboration module is specifically configured to:

    determine K edge devices based on device similarity between the edge devices in the first class group, wherein the similarity indicates a degree of similarity between application scenario features of data of two edge devices, K is an integer greater than or equal to 1, and K is less than a quantity of edge devices comprised in the first class group; and
    obtain the first training set based on the data of the first edge device and data of the K edge devices in the first class group.

11. The apparatus according to any one of claims 8 to 10, wherein the apparatus further comprises a class group generation module; and
    the class group generation module is configured to classify edge devices in a system into a plurality of class groups based on a classification policy, wherein the classification policy indicates a classification rule based on device similarity between the edge devices, the plurality of class groups comprise the first class group, and each class group comprises at least two edge devices.

12. The apparatus according to claim 11, wherein the device similarity between the edge devices is determined based on an application scenario feature of data of the edge devices in the system in a preset time period.

13. The apparatus according to any one of claims 8 to 12, wherein the application scenario feature comprises at least one of a light feature, a texture feature, a shape feature, and a spatial relationship feature.

14. The apparatus according to any one of claims 8 to 13, wherein the apparatus further comprises a display module; and
    the display module is configured to display the first class group and the trained first neural network.

15. A data processing system, wherein the data processing system comprises a memory and at least one processor, the memory is configured to store a group of computer instructions, and when executing the group of computer instructions, the processor performs the operation steps of the method according to any one of claims 1 to 7.

FIG. 1

Convolutional neural network 200

Neural network layer 230

Output layer 240

Hidden layer n (Layer 23n)

Hidden layer 2 (Layer 232)

Hidden layer 1 (Layer 231)

Convolutional layer/
Pooling layer 220

Layer 226

Layer 225

Layer 224

Layer 223

Layer 222

Layer 221

Input layer 210

FIG. 2

FIG. 3

**Training device 320**

Application scenario feature of data of edge devices

Step 410

Edge devices in a system

N —

Edge device 1

...

Device similarity between the edge devices

Step 420: Classification into class groups

M class groups

First class group

Edge device 1_s

Edge device 1_1

Second class group

Edge device 2_x

Edge device 2_1

...

$M^{th}$ class group

Edge device m_y

Edge device m_1

FIG. 4

**Training device 320**

Application scenario feature of data of a first edge device

Step 510

**First class group**

Edge device 1
O O O O O ...

K

Edge device 2
⊛ ⊛ ⊛ ⊛ ⊛ ...

...

First training set

O Data of the edge device 1

⊛ Sample data associated with the application scenario feature

Step 520: Perform iterative training on a first neural network

Step 530: Deploy a trained first neural network

First edge device

Optional forms

FIG. 5

Device 1
Device 2
Device 3
Device 4
Device 5

Image 1

Cat 0.9

Cat 0.8

Cat 0.85

Dog 0.55

Cat 0.95

(a)

Device 1
Device 2
Device 3
Device 4
Device 5

Image 2

Cat 0.9

Dog 0.7

Cat 0.85

Dog 0.55

Dog 0.6

(b)

FIG. 6

Autonomous vehicle →

System 700

Processing result

Edge station
(Execution device 730)

Interaction apparatus 731

User
Intelligent terminal
(Execution device 730)

Trained neural network

Request

Cloud data center 710

Neural network 301

Cloud service platform 720

Computing resource 711

Storage resource 712

Network resource 713

FIG. 7

FIG. 8

FIG. 9

EP 4 361 885 A1

## INTERNATIONAL SEARCH REPORT

| International application No. |
|---|
| **PCT/CN2022/101941** |

**A. CLASSIFICATION OF SUBJECT MATTER**

G06N 3/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT; WPABSC; ENTXTC; DWPI; ENTXT; CJFD: 设备, 终端, 应用, 场景, 特征, 相似, 数据集, 训练, 选择, 时间, 光照, 纹理, 形状, 空间, 环境, 扩增, 扩充, 联邦学习, equipment, terminal, application, scene, characteristic, feature, similarity, data, set, training, choose, time, illumination, texture, shape, space, environment, augmentation, expansion, federated learning.

**C. DOCUMENTS CONSIDERED TO BE RELEVANT**

| Category* | Citation of document, with indication, where appropriate, of the relevant passages | Relevant to claim No. |
|---|---|---|
| X | CN 111444848 A (GUANGZHOU EMBEDDED MACHINE TECHNOLOGY CO., LTD.) 24 July 2020 (2020-07-24) <br> description, paragraphs 0096-0127 | 1-15 |
| X | CN 111950621 A (PING AN LIFE INSURANCE COMPANY OF CHINA, LTD.) 17 November 2020 (2020-11-17) <br> description, paragraphs 0092-0102 | 1 |
| X | CN 111435463 A (HUAWEI TECHNOLOGIES CO., LTD.) 21 July 2020 (2020-07-21) <br> description, paragraphs 0187-0197 | 1 |
| A | CN 110378749 A (SHENZHEN QIANHAI WEBANK CO., LTD.) 25 October 2019 (2019-10-25) <br> entire document | 1-15 |
| A | CN 113221864 A (BENGBU UNIVERSITY) 06 August 2021 (2021-08-06) <br> entire document | 1-15 |
| A | CN 112989944 A (XI'AN XIANGXUN TECHNOLOGY CO., LTD.) 18 June 2021 (2021-06-18) <br> entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 August 2022** | **06 September 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/101941**

**C.    DOCUMENTS CONSIDERED TO BE RELEVANT**

| Category* | Citation of document, with indication, where appropriate, of the relevant passages | Relevant to claim No. |
|---|---|---|
| A | WO 2021121029 A1 (WEBANK CO., LTD.) 24 June 2021 (2021-06-24)<br>entire document | 1-15 |
| A | US 2021248244 A1 (WEBANK CO., LTD.) 12 August 2021 (2021-08-12)<br>entire document | 1-15 |

Form PCT/ISA/210 (second sheet) (January 2015)

**INTERNATIONAL SEARCH REPORT**
Information on patent family members

International application No.

**PCT/CN2022/101941**

| Patent document cited in search report | | | Publication date (day/month/year) | Patent family member(s) | | | Publication date (day/month/year) |
|---|---|---|---|---|---|---|---|
| CN | 111444848 | A | 24 July 2020 | None | | | |
| CN | 111950621 | A | 17 November 2020 | None | | | |
| CN | 111435463 | A | 21 July 2020 | None | | | |
| CN | 110378749 | A | 25 October 2019 | None | | | |
| CN | 113221864 | A | 06 August 2021 | None | | | |
| CN | 112989944 | A | 18 June 2021 | None | | | |
| WO | 2021121029 | A1 | 24 June 2021 | CN | 111091200 | A | 01 May 2020 |
| | | | | CN | 111091200 | B | 19 March 2021 |
| US | 2021248244 | A1 | 12 August 2021 | CN | 109492420 | A | 19 March 2019 |
| | | | | WO | 2020134704 | A1 | 02 July 2020 |
| | | | | EP | 3876125 | A1 | 08 September 2021 |
| | | | | CN | 109492420 | B | 20 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111015826